# FASCICULE DE BREVET EUROPEEN

(11) **EP 2 189 787 B1**
(45) Date de publication et mention de la délivrance du brevet: **08.02.2012**
(21) Numéro de dépôt: 09176303.7
(22) Date de dépôt: 18.11.2009
(51) Int. Cl.: G01N 27/414

(54) **Procédé de réalisation d'une puce de détection d'éléments biologiques**
Verfahren zur Herstellung eines Mikrochips zur Detektion von biologischem Material
Method of fabrication of a chip for the detection of biological material

(30) Priorité: 20.11.2008 FR 0857893
(43) Date de publication de la demande: 26.05.2010
(73) Titulaire: Commissariat à l'Énergie Atomique et aux Énergies Alternatives, 75015 Paris (FR)
(72) Inventeur: Buckley, Julien, 38000, GRENOBLE (FR); Billoint, Olivier, 38000, GRENOBLE (FR); Delapierre, Guillaume, 38450, VIF (FR)
(74) Mandataire: Ilgart, Jean-Christophe

(56) Documents cités:
- DE-A1- 10 255 755
- DE-C1- 4 430 811
- US-A1- 2008 108 164
- BALTES H ET AL: "Microfabrication techniques for chemical/biosensors" PROCEEDINGS OF THE IEEE, IEEE. NEW YORK, US, vol. 91, no. 6, 1 juin 2003 (2003-06-01), pages 839-863, XP011097409 ISSN: 0018-9219

## Description

### DOMAINE TECHNIQUE

L'invention est relative au domaine de la microélectronique et en particulier à celui des dispositifs microélectroniques comprenant au moins un circuit de détection d'éléments biologiques.

L'invention prévoit et permet une co-intégration, sur un même substrat, de transistors particuliers dédiés à la détection d'éléments biologiques tels que des marqueurs biologiques, et de transistors classiques dotés d'une grille.

Elle concerne notamment un procédé de réalisation d'au moins un dispositif microélectronique comprenant, sur un même substrat, au moins un circuit de détection d'éléments biologiques et un ou plusieurs autres circuits de traitement de mesures.

L'invention concerne également la réalisation d'une puce électronique permettant d'établir de manière automatique, un pré-diagnostic médical ou un diagnostic médical.

### ÉTAT DE LA TECHNIQUE ANTÉRIEURE

La réalisation de dispositifs de détection de molécules biologiques sur puce est connue des documents DE 44 30 811 C1 et US 2008/0108164 A1.

Dans le document EP 1 557 884 A2, une puce de détection biologique permettant de détecter des éléments biologiques tels que l'ADN, des matériaux chimiques, des ions, est par exemple décrite.

La puce est fabriquée sur substrat SOI et comporte des transistors NMOS et PMOS classiques isolés par jonction PN formée à l'interface des régions dopées P et N des types de transistors respectifs.

Un tel dispositif a une sensibilité de détection électrique insuffisante.

Une telle puce comprend des moyens de transmission sans fil avec une antenne permettant de transmettre un signal de mesure destiné à être traité par un ordinateur.

Dans le document : « Fabrication of silicon nanowire devices for ultrasensitive, label-free, realtime détection of biological and chemical species » Patolsky, G. Zheng, C.M. Lieber, Nature protocols, Vol. 1, N°4, pp. 1711-1724, 2006, un dispositif doté de transistors de détection biologique comportant des canaux sous forme de canaux de Si de taille nanométrique est décrit.

Dans un tel dispositif, les canaux sont sous forme de nanofils répartis de façon aléatoire sur des contacts métalliques. Un procédé de fabrication des nano-fils par dépôt chimique en phase vapeur est donné. Ce procédé ne permet pas de répartir les canaux de manière précise. Par ailleurs, avec un tel procédé, les nano-fils obtenus présentent une longueur et un diamètre difficilement contrôlable, ce qui crée une dispersion entre les caractéristiques électriques des différents canaux.

Dans le document : « Quantitative real-time measurements of DNA hybridization with alkylated non-oxidized silicon nanowires in electrolyte solution », Y.L. Bunimovich, Y.S. Shin, W.S. Yeo, M. Amori, G. Kwong, J.R. Heath, Journal of American Chemical Society, 128, pp. 16323-16331, un procédé de fabrication de composants à semi-conducteur de détection d'éléments biologiques à nano-fils semiconducteurs est également décrit. Ce procédé appelé SNAP (SNAP pour « Superlattice Nanowire Pattern transfer) permet quant à lui d'obtenir des nano-fils ordonnés.

Le document : « Label-free immunodetection with CMOS-compatible semiconducting nanowires », E. Stem, J.F. Klemic, D.A. Routenberg, P.N. Wyrembak, D.B. Turner-Evans, A.D. Hamilton, D.A. LaVan, T.M. Fahmy, M.A. Reed, Nature, Vol. 445 décrit une autre méthode pour fabriquer des nano-canaux de transistors de détection d'éléments biologiques.

Il se pose le problème de réaliser un nouveau dispositif microélectronique de détection d'éléments biologiques de sensibilité améliorée, et capable d'effectuer un traitement de signaux mesurés.

### EXPOSÉ DE L'INVENTION

La présente invention concerne un procédé de réalisation d'un dispositif microélectronique doté d'au moins un circuit de détection d'éléments biologiques comprenant des étapes détaillées dans la revendication 1.

Les récepteurs biologiques encore appelés sondes biologiques, peuvent être par exemple sous forme d'ADN, d'oligo-nucléotides, de protéines, d'enzymes, ou d'anticorps.

La fixation ou le greffage peut être réalisé par l'intermédiaire d'une couche organique ou de liens organiques (linker selon la terminologie anglo-saxonne).

La couche organique ou les liens organiques, formé(e)(s) sur ladite surface sont alors prévu(e) en fonction du récepteur biologique ou de la sonde biologique que l'on fixe ou greffe sur elle (sur lui).

On peut par exemple mettre en oeuvre les associations suivantes :
- Une couche organique nucléophile sur laquelle des récepteurs biologique électrophiles sont fixés,
- une couche organique électrophile sur laquelle des récepteurs biologiques nucléophiles sont fixés.

Par « transistor » on entend un composant électronique à base de semi-conducteur comportant au moins une zone semi-conductrice dite « de canal » entre une zone dite « de source » et une zone dite « de drain », et des moyens pour contrôler le passage d'un courant électrique dans la zone de canal.

Pour les transistors du deuxième type, les moyens pour contrôler la conductivité du canal comportent une grille, tandis que pour les transistors du premier type les moyens pour contrôler la conductivité du canal comportent des récepteurs (également appelés sondes) biologiques destinés à être liés ou à associés à des éléments (ou marqueurs) biologiques à détecter. En fonction de la présence ou non et de la quantité d'éléments (ou marqueurs) biologiques, la conductivité du canal des transistors du deuxième type sera destinée à varier.

Le procédé suivant l'invention permet de co-intégrer, sur un même substrat, d'une part des transistors ayant une structure classique, et par exemple dédiés à un circuit logique de contrôle et/ou de traitement de signaux, et d'autre part des transistors de détection biologique.

Les récepteurs biologiques fixés à l'étape c) peuvent éventuellement être disposées dans une couche d'encapsulation. Cela permet d'améliorer la stabilité de la fixation des molécules et de mettre en oeuvre un dispositif avec une quantité importante de récepteurs.

Les récepteurs biologiques sont choisis afin d'avoir une affinité avec un ou plusieurs marqueurs biologique à détecter, à savoir au moins une protéine ou un anticorps, ou au moins un virus, ou des oligonucléotides ou de l'ADN.

Selon une possibilité de mise en oeuvre, entre l'étape a) et l'étape b), le procédé comprend des étapes de :
- dépôt d'au moins une couche à base d'au moins un matériau isolant recouvrant lesdits transistors,
- réalisation d'un ou plusieurs trous dans ladite couche de matériau isolant, de manière à dévoiler la face supérieure de la grille respective des transistors du premier type,
- remplissage des trous à l'aide du matériau de grille, choisi de manière à être gravé de manière sélective vis-à-vis du matériau isolant, le remplissage permettant de former des blocs à base dudit matériau donné reposant respectivement sur la face supérieure des grilles des transistors du premier type, le procédé comprenant en outre, préalablement ou en même temps que ledit retrait effectué à l'étape b), le retrait dudit matériau donné.

La réalisation desdits blocs permet de faciliter le retrait effectué à l'étape b).

Le choix du matériau de grille pour le remplissage des trous facilite le retrait, au moins partiel des grilles, effectué à l'étape b), et éventuellement d'effectuer ce retrait en une seule fois.

Les trous peuvent avoir un fond avec une surface plus importante que la surface de la face supérieure de la grille des transistors du premier type.

Cela permet de former des blocs à base dudit matériau donné avec des dimensions plus importantes que celles des grilles, et de s'affranchir ainsi d'éventuelles difficultés d'alignement lorsque l'on souhaite ensuite réaliser le retrait au moins partiel des grilles.

Après le remplissage desdits trous à l'aide du matériau de grille, on peut former une ou plusieurs couches isolantes, et un ou plusieurs niveaux métalliques d'interconnexion en regard desdits transistors du deuxième type, le procédé peut alors comprendre en outre : la formation, en regard des transistors du premier type, d'une ou plusieurs ouvertures dans lesdites couches isolantes de manière à dévoiler les blocs à base du matériau de grille et le retrait du matériau de grille à l'étape b) étant effectués à travers lesdites ouvertures.

Selon une première possibilité de mise en oeuvre, la grille peut être entièrement retirée à l'étape b), les molécules réceptrices étant fixées sur la zone de canal des transistors du premier type.

Selon une deuxième possibilité de mise en oeuvre, la grille peut être partiellement retirée à l'étape b), de manière à dévoiler la couche de diélectrique de grille, les molécules réceptrices étant fixées sur la couche de diélectrique de grille des transistors du premier type.

Le procédé peut comprendre en outre après l'étape c), le remplissage des ouvertures par au moins un liquide destiné à servir à véhiculer des éléments biologiques ou des marqueurs biologiques à détecter.

L'invention concerne également un dispositif microélectronique comprenant, sur un substrat :
- au moins un circuit de détection d'éléments biologiques comprenant une pluralité de transistors comportant au moins un canal semi-conducteur, et des récepteurs biologiques, aptes à recevoir un ou plusieurs éléments biologiques, fixés sur une surface située en regard de la zone de canal ou sur la zone de canal,
- une autre pluralité de transistors comprenant chacun au moins une grille formée d'au moins une couche à base d'au moins un matériau de grille sur au moins une couche de diélectrique de grille, ladite grille reposant sur une zone de canal.

Les récepteurs biologiques peuvent être fixés par l'intermédiaire d'une couche organique ou de liens organiques, sur la zone de canal ou sur ladite couche de diélectrique de grille.

Les récepteurs biologiques peuvent être également disposés dans une couche d'encapsulation.

Les récepteurs biologiques peuvent être prévus pour recevoir au moins un marqueur biologique tel qu'au moins une protéine, ou au moins un virus, ou peuvent comporter des nucléotides et être prévus pour recevoir de l'ADN.

Le dispositif peut comprendre en outre, sur ledit substrat :
- des moyens de mémorisation prévus pour mémoriser des données d'une ou plusieurs mesures effectuées par ledit circuit de détection, et des données de valeurs de références ou de plages de valeurs référence,
- des moyens comparateurs prévus pour comparer une ou plusieurs mesures effectuées à une ou plusieurs valeurs de référence ou plages de valeurs de référence.

Le dispositif peut également comprendre en outre, sur ledit substrat : des moyens pour détecter un écart entre des mesures effectuées par le circuit de détection et des valeurs de référence.

Le dispositif microélectronique suivant l'invention peut être ainsi adapté à la réalisation au moins partielle de diagnostics médicaux.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- les figures 1A-1O, illustrent un exemple de procédé de réalisation d'un dispositif suivant l'invention, comportant, sur un même substrat, des composants à semi-conducteur dédiés à la détection d'éléments biologiques, et des transistors dotés d'une grille de contrôle dont certains peuvent être dédiés au traitement de signaux électriques produits par les transistors de détection,
- les figures 2A-2C, illustrent des exemples de transistors formés à l'aide d'un procédé suivant l'invention et dédiés à la détection d'éléments biologiques, les transistors comportant sur la figure 2A des molécules réceptrices identiques fixées en regard d'une zone de canal, les transistors comportant sur la figure 2B plusieurs molécules réceptrices différentes fixées en regard d'une zone de canal, les transistors comportant sur la figure 2C des molécules réceptrices dans une couche d'encapsulation,
- la figure 3, illustre un exemple particulier de procédé de fixation ou de greffage de molécules réceptrices comportant au moins une fonction nucléophile, sur une zone située en regard d'un canal d'un transistor destiné à la détection d'éléments biologiques,
- la figure 4, illustre un exemple de puce de détection d'éléments biologiques comportant au moins un circuit de détection d'éléments biologiques et au moins un circuit de traitement de signaux détectés par le circuit de détection d'éléments biologiques,
- la figure 5, donne des exemples de courbes représentatives de quantités de marqueurs utilisés pour la détection du VIH, en fonction du temps.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

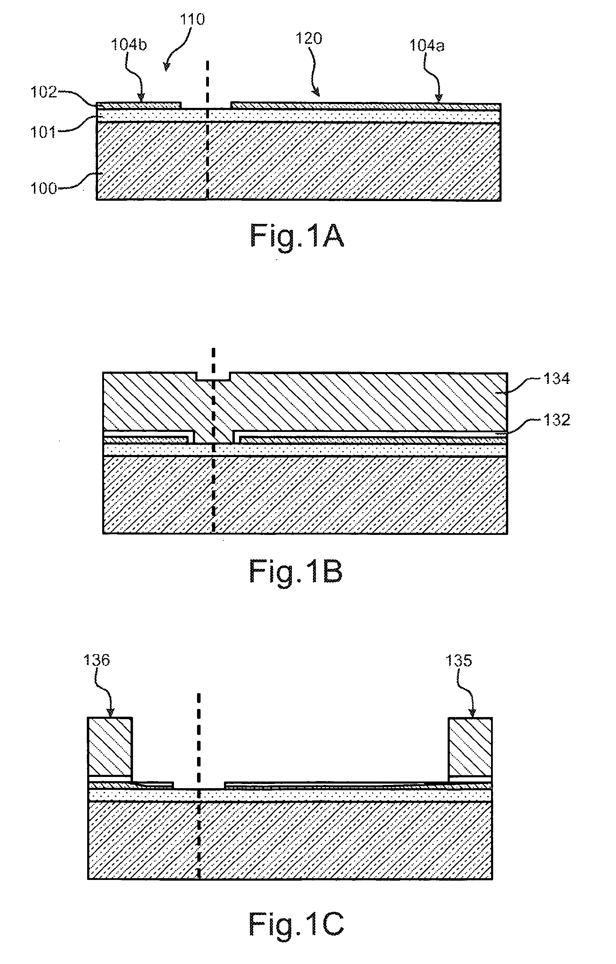

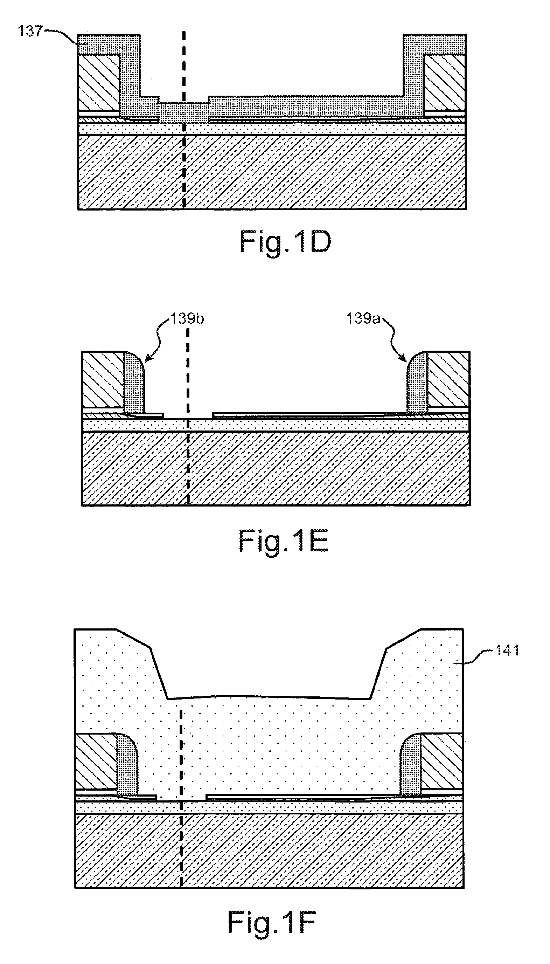

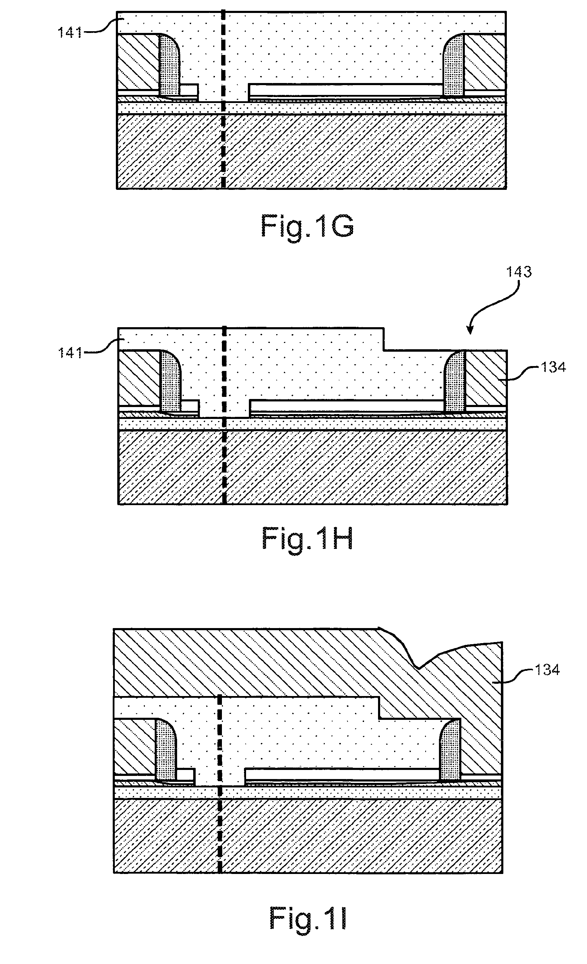

Un exemple de procédé suivant l'invention, de réalisation d'un dispositif microélectronique doté d'au moins un circuit de détection d'éléments biologiques ou de marqueurs biologiques et d'au moins un autre circuit, par exemple sous forme d'au moins un circuit logique, prévu pour le traitement de signaux de mesure, va à présent être donné en liaison avec les figures 1A-1O (des parties du dispositif dédiées à la réalisation du circuit de détection et à la réalisation du circuit logique étant délimitées par une ligne discontinue sur ces figures).

Le matériau de départ de ce procédé peut être un substrat de type semi-conducteur sur isolant, tel qu'un substrat SOI (SOI pour « Silicon On Insulator »), formé d'un support 100 semi-conducteur, par exemple à base de silicium, recouvert d'une couche isolante 101, par exemple à base de SiO₂, elle-même recouverte d'une fine couche semi-conductrice 102, à base d'un matériau semi-conducteur, tel que par exemple du Si.

On forme ensuite des zones actives 104a, 104b de transistors dans la fine couche semi-conductrice 102. Cela peut être réalisé à l'aide d'au moins une étape de photolithographie, puis de gravure. La lithographie peut être réalisée par exemple à l'aide d'un faisceau UV ou par exemple à l'aide d'un faisceau d'électrons (« e-beam » selon la terminologie anglo-saxonne). Lors de cette photolithographie, des étapes de formation d'un masque de résine, puis de réduction du masque de résine par procédé communément appelé de « trimming » peuvent être effectuées.

Les zones actives peuvent être formées avec une dimension critique W par exemple comprise entre 5 et 50 nanomètres par exemple de l'ordre de plusieurs dizaines de nanomètres, par exemple de l'ordre de 40 nanomètres.

Certaines zones actives 104a sont destinées à la mise en oeuvre de composants à semi-conducteur particuliers, prévus pour la détection d'éléments biologiques tels que des marqueurs biologiques, de l'ADN, des protéines, des virus. Ces composants à semi-conducteur particuliers seront appelés transistors, et qualifiés de « transistors du premier type » dans la description qui suit.

D'autres zones actives 104b sont prévues pour des transistors d'un deuxième type, notamment des transistors d'un ou plusieurs circuits de traitement de signaux (figure 1A).

Ensuite, on forme un empilement de grille, en déposant sur les zones actives 104a et 104b, une couche d'au moins un matériau diélectrique 132 de grille, par exemple tel que du SiO₂ puis au moins une couche de matériau de grille 134, par exemple tel que du polysilicium (figure 1B).

Puis (figure 1C), on réalise des motifs dans la couche 134 de matériau de grille et dans la couche de matériau diélectrique 132, afin de former des motifs 135, 136 d'électrodes de grilles, respectivement pour les transistors du premier type et les transistors du deuxième type. Ces motifs peuvent être formés à l'aide par exemple d'au moins une étape de photolithographie, puis de gravure.

Une étape de dopage des zones de source et de drain peut être ensuite effectuée, par exemple à l'aide d'au moins une étape d'implantation de certaines parties des zones actives 104a, 104b, situées de part et d'autre des grilles 135, 136.

Ensuite (figure 1D), on dépose une couche de matériau diélectrique 137, par exemple du Si₃N₄, que l'on grave de manière à conserver des zones isolantes contre les flancs des grilles 135, 136, ces zones isolantes formant des espaceurs 139a, 139b, respectivement, pour les transistors du premier type, et pour les transistors du deuxième type (figure 1E).

Les grilles 135 des transistors du premier type sont destinées à être au moins partiellement retirées, afin de réaliser des transistors particuliers, dédiés à la détection d'éléments biologiques.

Une couche à base de matériau isolant 141, par exemple à base de SiO₂, d'épaisseur qui peut être supérieure à celle de la couche diélectrique 132, est ensuite déposée, de manière à recouvrir l'ensemble des transistors. Le dépôt de la couche de matériau isolant 141 peut être conforme. Un polissage de la couche de matériau isolant 141 peut être ensuite effectué, par exemple par CMP (CMP pour « chemical mechanical polishing ») (figure 1G).

Puis, on forme un ou plusieurs trous 143 dans la couche isolante 141, de manière à dévoiler les grilles 135 des transistors du premier type, prévus pour la détection d'éléments biologiques.

Selon une possibilité, plusieurs trous 143, dévoilant chacun au moins une grille 135 d'un transistor du premier type, peuvent être formés.

Selon une autre possibilité, un seul trou 143 dévoilant plusieurs grilles l'ensemble des grilles 135 des transistors du premier type, peut être formé.

Le trou 143 ou les trous 143 réalisés peuvent être prévus avec des dimensions et en particulier une étendue plus grande que celle de la surface de la face supérieure des grilles 135 des transistors du premier type, de manière à dévoiler l'intégralité de la face supérieure de ces grilles 135.

Cela peut permettre de s'affranchir d'éventuels problèmes de désalignement vis-à-vis des motifs de grilles.

Le trou 143 (ou les trous 143) peut (ou peuvent) être réalisé(s) par exemple par photolithographie, puis par gravure de la couche isolante 141 (figure 1H).

On remplit ensuite le trou 143 ou les trous 143 à l'aide d'un matériau 144 donné choisi de manière à pouvoir être gravé de manière sélective vis-à-vis du matériau de la couche isolante 141.

Le matériau 144 donné est le même matériau que celui utilisé pour former les électrodes de grilles 135, 136. Cela pourra permettre ultérieurement de retirer le matériau donné et les grilles 135 en même temps ou lors d'une même étape de gravure, et de faciliter le retrait ultérieur des grilles 135 des transistors du premier type.

Le matériau 144 donné, peut être par exemple du polysilicium. Des blocs 145 à base de matériau 144, sont ainsi formés au dessus des grilles 135 des transistors du premier type.

Le matériau 144 peut avoir été déposé de manière à dépasser de l'embouchure des trous 143. Dans ce cas, une étape de polissage, par exemple par CMP, peut être ensuite réalisée afin de retirer du matériau 144 en excédant se trouvant dans une zone située au dessus de la face supérieure de la couche isolante 141. Des blocs 145 à base de matériau 144 sont conservés au dessus des grilles 135 des transistors du premier type.

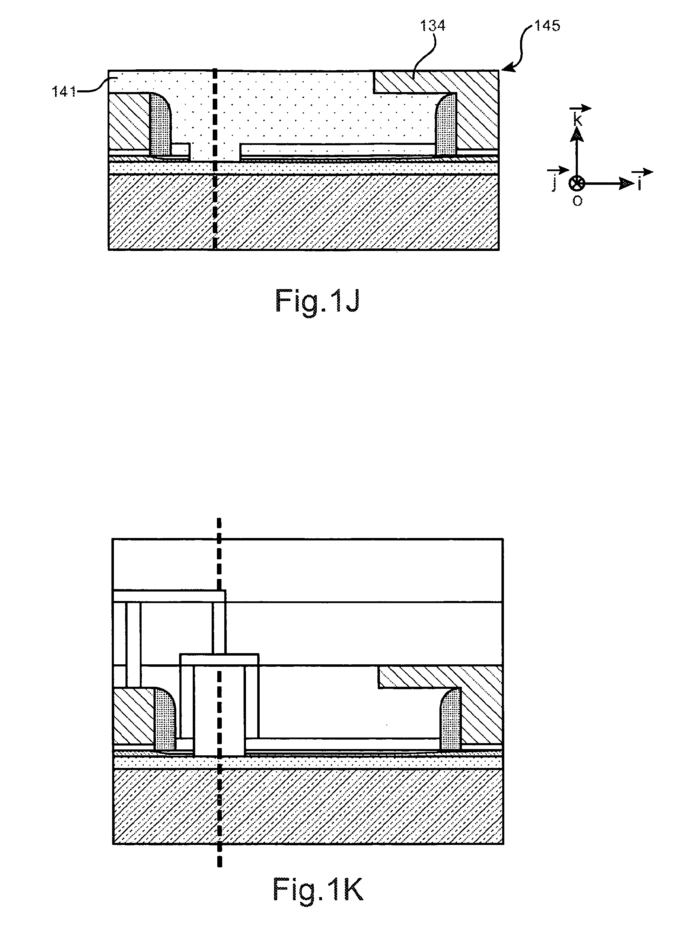

Ces blocs 145 peuvent avoir une dimension critique supérieure à celle des grilles 135 sur lesquelles ils reposent et en particulier une surface mesurée dans un plan parallèle au plan parallèle au plan principal du substrat (le plan principal du substrat 100 étant défini comme un plan passant par ce dernier et parallèle au plan [O; i̅; j̅] du repère orthogonal [O; i̅; j̅; k̅] sur la figure 1J) plus importante que la surface des grilles 135 mesurée dans le même plan (figure 1J).

Puis, un ou plusieurs niveaux d'interconnexion N₁,..., Nₘ, superposés, en particulier pour les transistors du deuxième type sont formés. Chaque niveau d'interconnexion est formé dans moins une couche isolante, par exemple à base de SiO₂, et comprend un ou plusieurs éléments conducteurs 147 verticaux (i.e. orthogonaux au plan principal du substrat) traversant cette couche isolante. Les éléments conducteurs 147 verticaux peuvent être par exemple à base de W, et sont communément appelés « vias » 147. Chaque niveau d'interconnexion est également formé d'une ou plusieurs lignes conductrices horizontales 149 (i.e. parallèles au plan principal du substrat), par exemple à base d'AlCu (figure 1K).

Ensuite, en regard des transistors du premier type, on forme une ouverture 153 ou plusieurs ouvertures 153 dans les couches isolantes C₁,..., Cₘ dans lesquelles sont réalisés les différents niveaux N₁,..., Nₘ, d'interconnexion, en regard des transistors du premier type, de manière à dévoiler les blocs 145 de matériau 134, formés au dessus des transistors du premier type.

L'ouverture 153 (ou les ouvertures 153) peut (peuvent) être éventuellement réalisés à l'aide d'un procédé comprenant au moins une étape de photolithographie à l'aide d'un masque identique à celui utilisé pour réaliser l'ouverture 143 ou les ouvertures 143 dans la couche isolante 141.

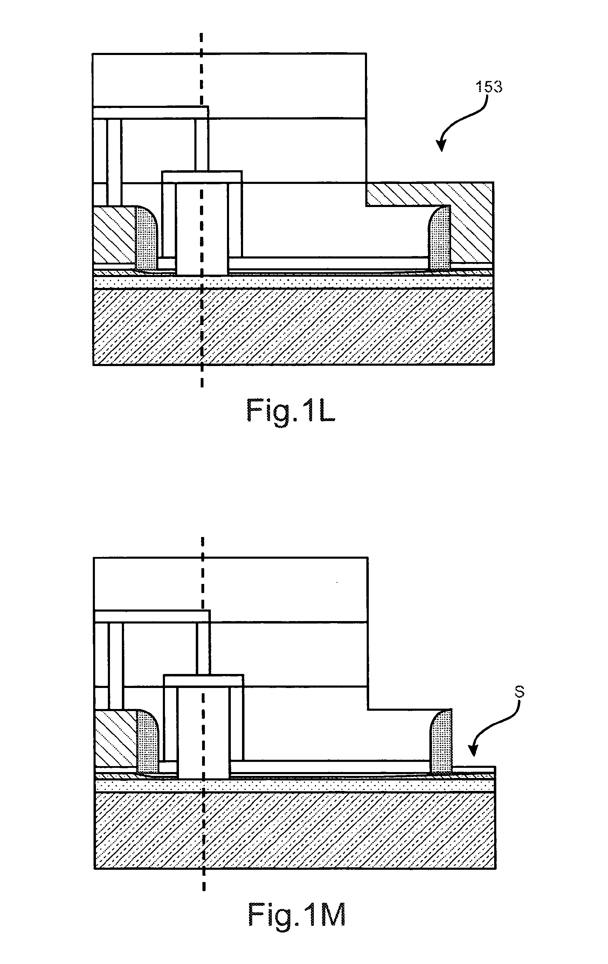

L'ouverture 153 ou les ouvertures 153 peut (peuvent) être de forme identique au(x) ouverture(s) 143 réalisé(s) précédemment dans la couche isolante 141 (figure 1L).

Ensuite, on retire les blocs 145 de matériau 134 ainsi qu'au moins partiellement les motifs de grille 135 des transistors du premier type et qui sont à base de matériau 134 de grille, par exemple en effectuant une gravure du matériau 134 de grille. Cette gravure peut être réalisée par exemple à l'aide de TMAH (TMAH pour « Tétra Méthyl Ammonium Hydroxyde ») (Figure 1M).

Selon une première possibilité (non représentée) de mise en oeuvre, une fine épaisseur de matériau de grille, peut être éventuellement conservée. L'épaisseur conservée de matériau de grille peut être comprise par exemple entre 5 nanomètres et 300 nanomètres, par exemple au moins inférieure à l'épaisseur de la première couche 134.

Selon une deuxième possibilité (figure 1M) de mise en oeuvre, la gravure peut être réalisée de manière à dévoiler les zones de diélectrique 132 de grille des transistors du premier type. Le diélectrique 132 peut être également au moins partiellement retiré, par exemple par gravure à l'aide d'HF.

Le diélectrique 132 peut être éventuellement partiellement gravé de manière à ne conserver qu'une épaisseur par exemple comprise entre plusieurs Angströms et 10 nanomètres.

Selon une variante, l'épaisseur totale de diélectrique 132 peut être ensuite retirée, par exemple par gravure à l'aide de HF, de manière à dévoiler les zones actives 104a.

Ensuite, on réalise une fonctionnalisation chimique de la surface S par une couche 155 d'accroche sur laquelle seront ensuite fixés ou greffés des récepteurs biologiques Mr. Les récepteurs biologiques Mr peuvent être fixés ou greffées par l'intermédiaire d'un ensemble de liens d'accroche eux même fixés sur la surface S.

Le greffage ou la fixation de récepteurs biologiques peut être précédé(e) d'une étape de nettoyage de la surface S située entre les espaceurs 136a des transistors du premier type et en regard de la zone de canal, par exemple à l'aide d'un rinçage acétone/éthanol. Une activation de cette surface S peut être ensuite réalisée pour donner naissance à la formation de groupements fonctionnels oxygénés, par exemple de groupements hydrophiles. Cette activation peut être réalisée par exemple par un procédé humide de type Brown, ou de type Caro ou par exemple par à l'aide d'un plasma à sec tel qu'un plasma O₂.

La fonctionnalisation chimique de la surface S permet de créer une couche 155 d'accroche ou des liens d'accroche destiné(e)(s) à recevoir les récepteurs biologiques Mr.

La couche 155 d'accroche peut avoir une épaisseur comprise entre de 1 nm à plusieurs dizaines de nanomètres. La couche d'accroche 155 (ou les liens d'accroche) peut être (peuvent être) de nature organique.

Selon une possibilité, la couche 155 peut être prévue nucléophile, tandis que les récepteurs biologiques Mr fixés sur cette couche sont électrophiles.

Dans ce cas, la couche 155 d'accroche peut comporter une ou plusieurs fonctions ou groupements nucléophiles tels que par exemple une ou plusieurs fonction(s) ou groupement(s) amine(s), oxyamine(s), alcool(s), thiol(s).

Selon un autre exemple, la couche d'accroche 155 peut être prévue électrophile, tandis que les récepteurs biologiques Mr fixés sur cette couche sont de nature nucléophile.

La zone plus particulièrement fonctionnalisée est la zone située en regard de la zone de canal des transistors du premier type, et qui peut être à base de diélectrique de grille dans le cas où une épaisseur de diélectrique 132 de grille a été conservée ou éventuellement de matériau 134 de grille, dans le cas où une épaisseur de matériau 134 de grille a également été conservée.

Un récepteur biologique Mr est une molécule biologique fixée sur la surface S par l'intermédiaire d'une couche 155 d'accroche ou de liens d'accroche et ayant une affinité spécifique avec un élément biologique à détecter également appelé « marqueur biologique ».

Les récepteurs biologiques peuvent être prévus pour recevoir au moins un marqueur biologique tel que par exemple au moins une protéine ou un anticorps (par exemple de type PSA, TSH), ou au moins un virus (par exemple tel que l'influenza), ou peuvent comporter des nucléotides et être prévues pour recevoir de l'ADN.

Les récepteurs biologiques peuvent être par exemple des oligonucléotides (15-80 bases), ou des éléments PCR c'est-à-dire des brins d'ADN par exemple de plusieurs centaines à plusieurs dizaines de milliers de paires de base, ou des protéines, ou des anticorps pour la détection d'antigènes, ou des fragments d'anticorps comportant au moins un site permettant une affinité biologique.

La fonctionnalisation de récepteurs peut être réalisée par fixation ou un greffage de récepteurs biologiques sur une couche organique ou sur des liens organiques formé(e)(s) sur ladite surface S, dans une zone située, en regard, ou au-dessus, ou sur, des zones actives 104a des transistors du premier type, en particulier dans une zone située en regard, ou au-dessus, ou sur, une zone des transistors du premier type, destinée à jouer le rôle de zone de canal de transistor.

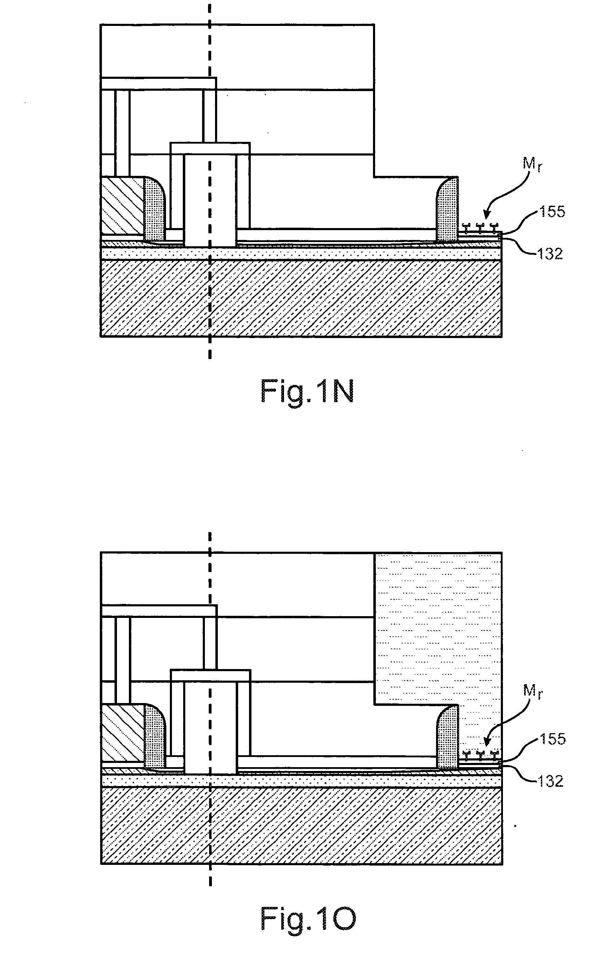

Sur la figure 1N, la fonctionnalisation de la surface S par une couche 155 d'accroche sur laquelle sont fixés ou greffés des récepteurs biologiques Mr est effectuée sur la zone de diélectrique 132.

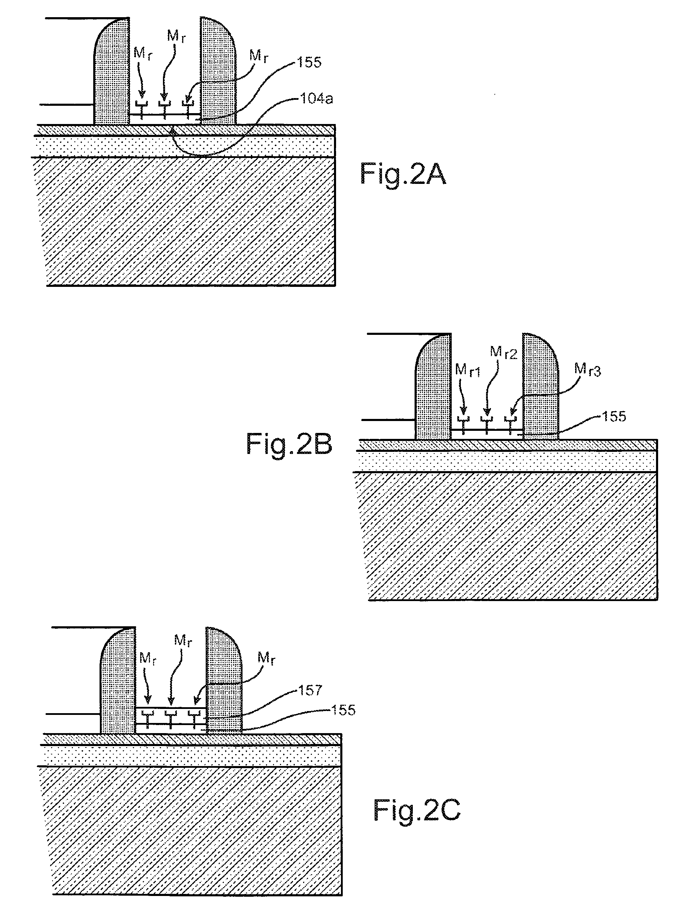

Selon une autre possibilité (figure 2A), la fonctionnalisation de la surface S par une couche 155 d'accroche sur laquelle sont fixés ou greffés des récepteurs biologiques peut être éventuellement effectuée directement sur la surface des zones de canal des transistors du premier type, dans le cas où le diélectrique 132 de grille et le matériau 134 de grille ont été totalement retirés entre les espaceurs 139a des transistors du premier type (figure 2A).

Les récepteurs biologiques ou sondes biologiques encore appelées « sondes biologiques » peuvent être ainsi immobilisées sur des zones semiconductrices de canal, ou éventuellement sur des zones de matériau diélectrique de grille.

Le fonctionnement des composants à semiconducteurs de détection d'éléments biologique formés à l'aide d'un tel procédé, reposent sur une variation de conductivité électrique d'un canal semi-conducteur, en fonction de la présence et d'une quantité d'éléments biologiques destinés à être placés sur les molécules réceptrices formées sur ou en regard de la zone semi-conductrice de canal.

Selon une application particulière, les récepteurs biologiques Mr peuvent être prévus ou mis en oeuvre pour recevoir de l'ADN. Dans ce cas, les récepteurs biologiques Mr peuvent comprendre des oligonucléotides, des produits PCR ou des fragments d'ADN.

Les sondes biologiques Mr peuvent être sur la surface S, sous la forme d'une couche qui peut être par exemple de plusieurs Angströms d'épaisseur, ou par exemple comprise entre plus plusieurs Angströms à et une centaine de nanomètres.

La couche de sondes biologiques Mr peut éventuellement avoir une épaisseur comprise par exemple entre 1 nm et 10 nm et être formée de plusieurs sous couches de récepteurs biologiques.

Les sondes biologiques ou molécules réceptrices peuvent être liées à la surface S de manière covalente ou être adsorbées. Fixer de telles molécules par l'intermédiaire d'une ou plusieurs liaisons covalentes peut permettre d'obtenir une robustesse améliorée.

Comme indiqué précédemment les molécules réceptrices Mr peuvent être reliées à la surface S par l'intermédiaire d'au moins un lien chimique spécifique communément appelé « linker » selon la terminologie anglo-saxonne, qui permet de faciliter l'accroche de la sonde biologique et/ou de permettre d'adapter les propriétés de l'interface organique/inorganique, telles que la rigidité, la conduction électrique, entre les liens organiques et la zone de réception des sondes biologiques. Lorsque des liens chimiques spécifiques ou des linker sont prévus pour fixer les sondes biologiques, ces liens comportent une fonction chimique capable de réagir avec les sondes biologiques, de manière à établir une liaison covalente, ou une interaction électrostatique, par exemple une interaction hydrophobe ou de type Van der Waals. A titre d'exemple, la liaison covalente entre le « linker » et la « sonde biologique » peut être formée par exemple par un lien de l'un ou l'autre des types suivants : C-N, C==N (imine), C-O, amide, ester, triazole à partir par exemple d'une réaction entre un alcyne et un groupement azide.

La sonde biologique Mr et son linker comprennent un groupement chimique adapté pour permettre à la sonde de se fixer à la surface S.

Dans un cas où la surface S est à base d'un matériau diélectrique tel que par exemple du SiO₂, Si₃N₄, du TiO₂, on peut mettre en oeuvre des sondes biologiques Mr ou des linker munis par exemple de fonctions : silanes par exemple telles que : -SiH3, R-SiX3, R2SiX2, R3SiX, où R est un groupement carboné et X est un groupement libérable de type halogéno ou alcoxy, ou phosphates ou phosphonates.

Dans un cas où la surface S sur laquelle on réalise la fixation est à base d'un matériau semi-conducteur tel que le silicium, on peut par exemple mettre en oeuvre des fonctions comportant des liaisons Si-C ou Si-O, par exemple à l'aide de fonctions alcène, alcyne, alcoxy, phénol, diazonium et halogénures, afin de fixer les récepteurs Mr.

Suivant le type de couche de récepteur que l'on souhaite réaliser, c'est-à-dire une mono-couche ou plusieurs couches, une couche fine par exemple de l'ordre du nanomètre ou une couche épaisse par exemple de l'ordre d'une centaine de nanomètres. La fixation des sondes biologiques peut être réalisée différemment.

Dans le cas où l'on souhaite réaliser une mono-couche et/ou une fine couche, celle-ci peut être réalisée par exemple par trempage de la surface S dans un solvant contenant des molécules à fixer : c'est à dire des sondes biologiques Mr et/ou des linker en présence éventuellement d'un ou plusieurs catalyseurs.

Une méthode dite de « Langmuir Blodgett » peut être également mise en oeuvre par exemple telle que celle décrite dans le document de I.R. Peterson , "Langmuir Blodgett Films ", J. Phys. D 23, 4, (1990) 379-95.

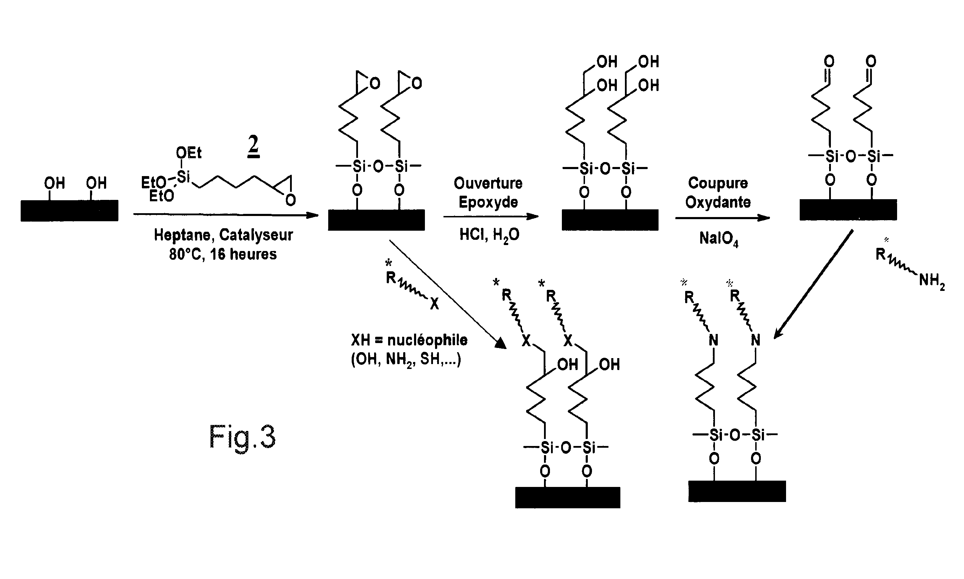

Un premier exemple particulier de procédé de fixation de récepteurs comportant une fonction nucléophile est donné en liaison avec la figure 3.

Pour réaliser une fixation de récepteurs comportant une fonction nucléophile, une activation de la surface sur laquelle on réalise le greffage est tout d'abord réalisée.

Une silanisation dans un solvant anhydre par exemple tel que le toluène peut ensuite conduire à l'obtention de fonctions époxydes. Cette silanisation peut permettre d'obtenir en surface des fonctions de type époxyde, réactives vis-à-vis de molécules réceptrices comportant des fonctions nucléophiles.

Les molécules réceptrices sont ensuite immobilisées et fixées de manière irréversible. Cette immobilisation irréversible peut être effectuée par création d'une liaison covalente obtenue par ouverture d'un cycle époxyde par la fonction nucléophile en milieu acide, basique ou neutre.

Il est également possible de transformer la fonction époxyde en fonction diol puis aldéhyde et d'y fixer ensuite la molécule biologique.

Cette deuxième voie comporte plus d'étapes mais permet de pouvoir conserver les surfaces dans un état stable (diol) avant utilisation.

Selon un deuxième exemple particulier de procédé de fixation, pour lequel les molécules réceptrices Mr sont prévues par exemple pour réceptionner de brins d'ADN :

On effectue tout d'abord une préparation chimique de la surface S de manière à obtenir des fonctions époxydes, puis une immobilisation des sondes réceptrices, qui dans cet exemple sont sous forme de fragments d'acide nucléique.

Les fonctions époxydes peuvent être formées par dépôt à l'aide par exemple d'un robot muni de têtes piézoélectriques. On peut réaliser ensuite une hybridation des sondes avec une cible complémentaire.

Un oligonucléotide modifié par exemple par une fonction NH₂ peut être déposé à une concentration par exemple de l'ordre de 10 tM dans une solution saline aqueuse par exemple telle que du Na₂HPO₄ à 0,3 M, à l'aide d'un robot muni de têtes piézoélectriques. Le volume des gouttes déposées peut être par exemple de l'ordre de plusieurs centaines de picolitres.

Après une réaction d'une durée par exemple de l'ordre de 15 heures, un lavage est effectué afin d'éliminer les sondes déposées en excès et n'ayant pas réagi avec la surface sur laquelle on souhaite les fixer. Ce lavage peut être effectué par exemple à l'eau et une solution basique Na₂HPO₄ de 0,3 M, et/ou une solution réductrice par exemple à base de NaBH₄ et de concentration de l'ordre de 0,1 M.

Les sondes réceptrices sont ensuite hybridées par une cible complémentaire par exemple de 20 mers, à une concentration pouvant varier de l'ordre de plusieurs fM à plusieurs µM.

Les transistors formés à l'aide d'un tel procédé permettent d'effectuer une détection de brins d'ADN cible chargés, par mesure de la conductance ou de la variation de conductance de la zone de canal soumise à une modification de son environnement électrostatique, due à la réception par les cibles greffées de brins d'ADN.

Pour en revenir avec la réalisation du dispositif microélectronique telle que décrite précédemment en liaison avec les figures 1A-1N, les sondes biologiques Mr peuvent être également déposées par exemple par technique communément appelée de « spotting ».

Selon une possibilité de mise en oeuvre, des sondes différentes, c'est-à-dire des molécules différentes de récepteurs biologiques Mᵣ₁, Mᵣ₂, Mᵣ₃ peuvent être fixées en regard d'une même zone de canal (figure 2B). Une méthode de « spotting » permet par exemple de déposer sur un même support des sondes différentes Mr1, Mr2, Mr3 à des emplacements différents.

Les récepteurs biologiques Mr peuvent être laissées libres ou, selon une autre possibilité (figure 2C), être encapsulées ou enrobées dans une couche 157 appelée « matrice », et qui peut être à base d'un matériau par exemple de type solgel ou polymère, et d'épaisseur qui peut être comprise entre plusieurs nanomètres et plusieurs centaines de nanomètres. Suivant sa formulation, ce matériau peut être poreux et laisser pénétrer certains fluides.

Une réalisation d'une matrice épaisse d'encapsulation 157, par exemple à base de polymère, peut être réalisée par un procédé solgel : comportant des étapes de trempage (« dipping » selon la terminologie anglo-saxonne) puis de retrait, ou de dépôt à la tournette (« spin-coating »), ou d'enduction laminaire, ou de nébulisation (« spraying » selon la terminologie anglo-saxonne). Une telle encapsulation dans une matrice 157 peut permettre de mettre en oeuvre des transistors avec une densité surfacique de molécules plus importante. Sans matrice, une densité de l'ordre de 1000 molécules/µm² peut être par exemple obtenue. Avec une encapsulation, une densité de l'ordre par exemple de 100000 molécules/µm² et augmenter la sensibilité et/ou la robustesse du système de détection.

Une fois la fonctionnalisation réalisée des molécules réceptrices Mr, on peut introduire un fluide, en particulier un liquide, par exemple une solution tampon, dans les ouvertures 153. Un tel liquide est destiné à recevoir ou contenir des éléments biologiques à analyser, susceptibles d'être reçus par les récepteurs biologiques (figure 1O).

On peut former une enceinte fermée autour du circuit de détection par exemple en formant un capot au dessus du circuit de détection.

Une enceinte fermée peut être créée notamment pour pouvoir renfermer le fluide, par exemple le liquide tampon biologique.

Le scellement peut être réalisé par sérigraphie à l'aide d'une colle, par exemple une colle activée par UV. Un tel mode de scellement permet de se dispenser d'un procédé à haute température, qui risquerait de détériorer les molécules réceptrices Mr d'éléments biologiques.

Des capillaires en verre, ayant par exemple un diamètre intérieur de l'ordre de 100 µm peuvent être prévus dans le dispositif pour permettre de faire circuler un fluide biologique, destiné à véhiculer des marqueurs biologiques et à être placé sur les zones S des transistors du premier type, comportant des molécules réceptrices Mr.

Le procédé qui vient d'être décrit permet la mise en oeuvre d'un dispositif comportant, sur un même substrat, à la fois des transistors particuliers, dédiés à la détection biologique et des transistors dotés d'une grille, dont certains peuvent être prévus pour le traitement de signaux acquis par les transistors de détection d'éléments biologiques, ce sur un même substrat. Les transistors particuliers et qui sont dédiés à la détection d'éléments biologiques sont des composants dotés d'un canal semi-conducteur et de molécules réceptrices fixées sur une surface en regard du canal, la conductivité du canal variant en fonction de la présence d'éléments biologiques présentes sur les molécules réceptrices.

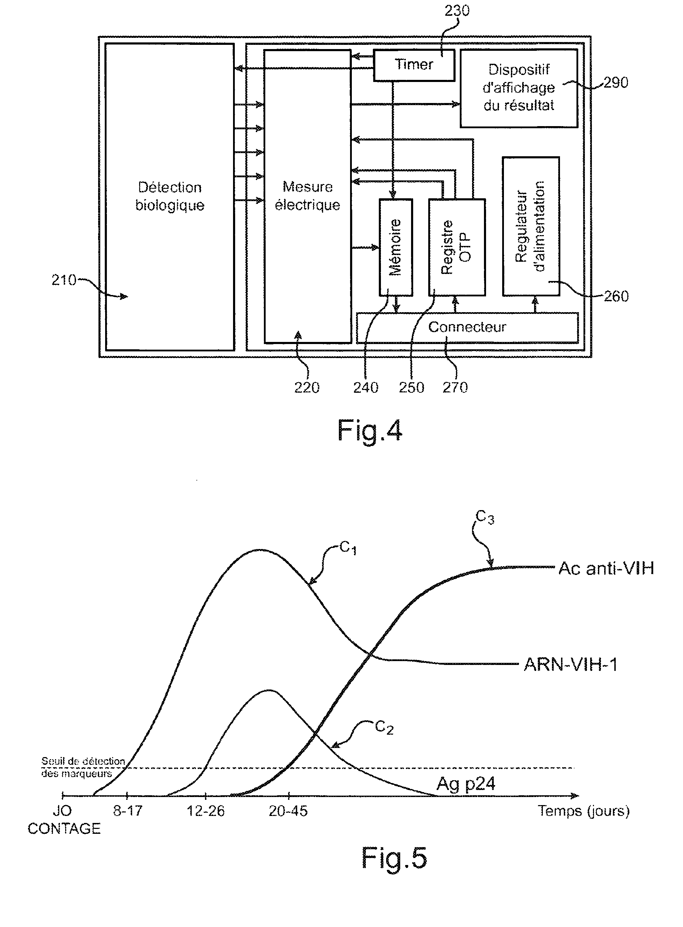

Un procédé tel que décrit précédemment permet de mettre en oeuvre un dispositif microélectronique, en particulier une puce prévue pour effectuer un diagnostic ou un pré-diagnostic ou une partie de diagnostic médical. Un exemple de puce de détection d'éléments biologique formée à l'aide d'un procédé microélectronique du type de celui décrit précédemment en liaison avec les figures 1A-1N est donné sur la figure 4.

La puce comporte un circuit ou un module de détection biologique 200 comportant des transistors détecteurs d'éléments biologiques, et en particulier de marqueurs biologiques (tels que ceux décrits précédemment en liaison avec les figures 1A-1N). Ce module de détection est destiné à fournir des signaux électriques de mesure à un circuit 220 ou à un module 220 de traitement des signaux électriques fournis par le circuit de détection. Ce circuit peut être prévu pour effectuer une lecture des signaux détectés, pour convertir en données numérique les mesures, les données numériques mesurées étant ensuite traitées. Des traitements par exemple d"amplification, de comparaison, de filtrage de conversion analogique-numérique, peuvent être notamment effectuées. Le module 220 peut être prévu pour détecter une variation de conductance des transistors de détection biologique, cette variation de conductance étant amplifiée puis comparée à un seuil, fixé via un registre OTP par le biais d'un comparateur qui peut délivrer un signal numérique binaire.

Cette information peut permettre d'effectuer une partie de diagnostic et permettre de savoir si oui ou non, une concentration d'une molécule x dépasse un seuil prédéterminé au bout d'un intervalle de temps également prédéterminé et fixé par la programmation d'un module séquenceur 230 également appelé « TIMER ». Ce module séquenceur 230 est prévu pour fournir une base de temps, notamment au module 210 de détection biologique, au module 220 et à au moins une mémoire 240.

Le module séquenceur 230 est destiné à gérer le séquençage des détections, de la restitution des mesures, et de leur mémorisation. Un tel séquençage est adapté en fonction de l'application et du type de diagnostic à effectuer.

Une mémoire de données 240 peut être prévue pour le stockage de données de mesures en provenance du module 220.

Un module mémoire programme 250 ou registre programmable 250, par exemple de type OTP (OTP pour « One Time Programmable ») est également prévu. Un tel module peut comprendre notamment des valeurs de référence enregistrées ou des plages de valeurs de référence enregistrées. Les valeurs de référence enregistrées peuvent être par exemple des seuils de quantités d'éléments biologiques tels que des marqueurs biologiques à détecter.

Chaque bloc de la puce peut être mis en service ou désactivé par l'intermédiaire du module séquenceur 230 qui est programmé via le module 250 afin d'adapter la base de temps des mesures ou le séquençage des mesures au diagnostic à effectuer. Une fois que le temps nécessaire pour effectuer un diagnostic ou une première mesure ou une première série de mesures est écoulé, le séquenceur 230 peut mettre en service le module 220 de traitement des mesures et déclencher une mémorisation des données mesurées et traitées dans la mémoire 240.

Un régulateur d'alimentation 260 peut être prévu pour permettre de transformer une première tension délivrée par exemple par une batterie, par exemple de l'ordre de 2.5 volts ou pouvant aller par exemple à 3,3 Volts, en une deuxième tension adaptée à la technologie des différents modules 210, 220, 230, 240, par exemple une tension de l'ordre de 1,8 volt. Il est également possible de mettre en oeuvre une source de tension externe communément appelée alimentation de table ou alimentation stabilisée.

Des connecteurs 270 peuvent être prévus entre le régulateur d'alimentation 260 et un ou plusieurs autres modules, par exemple le régulateur et les mémoires 240, 250.

Des connecteurs 270 peuvent être prévus pour interfacer le circuit avec l'extérieur, par exemple pour venir lire le contenu de la mémoire 240, ou pour programmer le registre OTP 250 ou encore alimenter le circuit.

Un dispositif d'affichage 290 peut être également prévu sur la puce.

Des mesures de la présence d'un ou plusieurs marqueurs biologiques au bout de durées ou périodes T prédéterminées peuvent être effectuées.

Selon une application particulière, une telle puce peut être dédiée à, et mise en oeuvre pour, la réalisation d'un diagnostic ou d'un pré-diagnostic ou d'une partie de diagnostic médical.

Une série de différents tests ou d'opérations automatisées peuvent être mise en oeuvre par la puce afin d'établir un diagnostic ou un pré-diagnostic.

Parmi ces opérations la puce est adaptée pour mettre en oeuvre :
- des mémorisations de données de mesures effectuées par ledit circuit de détection,
- des comparaisons de mesures effectuées à des valeurs de référence, ou des plages de valeurs de référence mémorisées dans le registre 240.

La puce peut également mettre en oeuvre des détections d'écart entre des mesures effectuées par le circuit de détection et des valeurs de référence.

Plusieurs exemples d'opérations ou de tests susceptibles d'être effectués par une puce de détection d'éléments biologiques suivant l'invention, vont à présents être donnés.

Un test dit « test alarme » comprenant par exemple une opération logique de type OR, peut être mise en oeuvre par exemple pour détecter l'apparition d'au moins un 1-marqueur biologique dans le temps.

La puce, peut être mise en oeuvre pour établir un ou plusieurs profils représentatifs chacun d'une quantité d'au moins un marqueur biologique donné détecté au cours du temps. De tels profils peuvent être sous forme d'un ensemble de données discrètes de quantité de marqueurs ou d'éléments biologiques détectés relevées au cours du temps.

La puce peut être également mise en oeuvre pour établir au moins une comparaison de ces profils par rapport à des profils standards ou de référence, par exemple à des profils standards ou de référence.

Un test de type dit « oui/non » peut être alors mis en oeuvre pour indiquer, si, suite à une comparaison entre un ou plusieurs profils mesuré(s), ce profil ou ces profils mesurés correspondent, ou se rapprochent, oui ou non, d'un profil standard ou de référence.

Un autre type de test dit « semi-quantitatif », permettant d'associer des données issues de mesures effectuées, à un indicateur de niveau, par exemple un indicateur de niveau de risque tel qu'un niveau de risque de maladie parmi plusieurs niveaux prédéterminés, peut être également mis en oeuvre.

La puce peut être ainsi également mise en oeuvre pour établir une ou plusieurs comparaisons d'une quantité d'éléments biologiques tels que des marqueurs biologiques par rapport à des plages de valeurs de référence, et à délivrer en fonction de cette comparaison un indicateur de niveau, par exemple un indicateur de niveau de risque de maladie.

Un test semi-quantitatif, prévu pour délivrer un niveau de risque parmi 3 niveaux de risques différents : « faible », « modéré », « élevé » correspondant à 3 gammes de valeurs de quantités de marqueurs différentes peut être par exemple effectué.

Un exemple d'algorithme de test semi-quantitatif peut être le suivant :
- Si marqueur 1 - fort OU marqueur_3 = fort, alors niveau_risque_1 - 5.
- Si marqueur_1 = fort OU marqueur_2 = fort, alors niveau_risque_2 = fort
- Si niveau_risque_1 + niveau_risque_2 > SEUIL, alors diagnostic positif.

Des plages de valeurs peuvent être utiles pour établir un premier diagnostic ou pré-diagnostic.

Des exemples d'applications de la puce décrite ci-dessus au diagnostic de différentes maladies ou pathologies vont à présent être donnés.

Un premier exemple d'application concerne l'infarctus du myocarde.

Des exemples de cinétiques d'apparition de différents marqueurs utilisés dans le cadre de la détection de cette pathologie, sont répertoriés dans le tableau I ci-dessous.

**Tableau I**

| **Marqueur** | **PM (kDa)** | **Délai d'apparition** | **Pic** | **Normalisation *** |
|---|---|---|---|---|
| **Myoglobine** | **17** | **2-3 h** | **8-12h** | **24-36 h** |
| LDH | 134 | 12-16 h | 30-40 h | 8-12 jours |
| CK | 86 | 6-8 h | 20-26 H | 3 jours |
| **CK-MB masse** | **86** | **3-8 h** | **10-24** h | **3-4 jours** |
| Osoformes CK | 86 | 1-4 h | 4-8 h | 1-2 jours |
| **Troponine T cardiaque** | **19.8** | **3-12 h** | **12-48 h** | **5-14 jours** |
| **Troponine I cardiaque** | **24** | **6-12 h** | **2-4 jours** | **6-10 jours** |
| Chaînes légères de la Myosine | 18 | 6-12 h | 2-4 jours | 6-12 jours |
| Chaînes lourdes de la Myosine | 215 | 24-36 h | 5-6 jours | 14 jours |

| | | | | |
|---|---|---|---|---|
| *en l'absence de complications et de thérapeutique thrombolytique. | | | | |

Il est par exemple possible d'associer une détection de marqueurs précoces comme la Myoglobine (2-3h) à celle de marqueurs de certitude comme la CK-MB ou les troponines T et I, pour confirmer un diagnostic de risque d'apparition de cette pathologie.

On peut envisager également un test permettant le suivi de la myoglobine et s'il y a une augmentation du niveau de myoglobine au-delà d'un seuil prédéterminer, de passer automatiquement au suivi d'autres marqueurs. Ceci permet d'éviter de suivre tous les marqueurs en même temps et permet par exemple de réduire les flux de données ou la consommation de la puce.

Dans le tableau II ci-dessous, des exemples de marqueurs utiles à l'établissement de diagnostics précoces, de certitude ou tardifs sont donnés, ainsi que des marqueurs biologiques dans le cadre d'une détermination de la taille d'une nécrose ou du succès d'une reperfusion.

**Tableau II**

| **Situation** | | **Marqueurs Utiles** |
|---|---|---|
| Diagnostic | Précoce | MGB, CK-MBm, isoformes CK |
| | de certitude | cTnI, cTnT |
| | Tardif | cTnI, cTnT |
| Taille de la nécrose | | MGB |
| Succès de la reperfusion | | MGB, cTnT, isoformes CK |

Un deuxième exemple d'application, concerne le processus de détection du VIH (virus de l'immunodéficience humaine). Pour cette application, une détection de 3 types de marqueurs différents peut être mise en oeuvre.

Sur la figure 5, des exemples de courbes représentatives de quantités de marqueurs utilisés pour la détection du VIH, en fonction du temps, sont données.

Un premier marqueur précoce, est l'ARN-VIH-1 (courbe C1 sur la figure 5).

Un suivi d'un niveau d'ARN-VIH-1 peut être effectué. Quand ce niveau augmente significativement et dépasse un seuil prédéterminé, on peut démarrer le suivi d'un deuxième marqueur : l'AgP24 (courbe C2), puis éventuellement d'un troisième marqueur : l'Ac anti-VIH1 (courbe C3).

Un troisième exemple d'application, est la détection de marqueurs cancéreux.

Une élévation qualifiée de « modérée » d'un marqueur peut être due à une cause bénigne plutôt qu'à une présence effective d'un cancer.

Une élévation qualifiée d'« importante » de plusieurs marqueurs peut être quant à elle significative.

On peut prévoir des seuils d'alerte de quantité de marqueurs, et suivant les quantités de marqueurs détectés, associer un niveau de risque de cancer.

Différentes pathologies cancéreuses et leurs marqueurs respectifs sont donnés à titre d'exemple dans le tableau III ci-dessous :

**Tableau III**

| | Tumeurs mucineuses | CA19-9, ACE |
|---|---|---|
| **PROSTATE** | **ADK** | PSA, FPSA |
| **TESTICULE** | Séminome | HCG, AFP |
| | Non séminome | HCG, AFP |
| **COLORECTAL** | **ADK** | ACE, CA 19-9, CA 125 |
| **PANCREAS** | ADK | CA 19-9, ACE |
| | Endocrine | CA 19-9, ACE, NSE |
| **FOIE** | Hepatocarcinome | AFP, ACE |
| **ESTOMAC** | **ADK** | CA 72-4, CA 19-9, ACE |
| **OESOPHAGE** | ADK | ACE |
| | Epidermoide | SCC, CYFRA 21-1 |
| **THYROIDE** | Medullar | ACE, NSE |
| | Differencié | Thyroglobuline |
| **POUMON** | ADK | ACE, CA 19-9, CA125 |
| | Epidermoide | CYFRA 21-1 |
| | Petites cellules | NSE, CA 125 |
| **VESSIE** | | TPA, SCC, ACE, CYFRA |

Dans le tableau IV ci-dessous, sont répertoriés des augmentations susceptibles d'être qualifiées de « forte » ou « modérées » en fonction des marqueurs présentées dans le tableau précédent.

**Tableau IV**

| **Marqueurs** | **Unités** | **Normal** | **Augmentations modérées** | **Augmentations fortes** |
|---|---|---|---|---|
| **ACE** | ng/ml | < 5 | 5-10 | 10-100.000 |
| **AFP** | ng/ml | < 15 | 15-200 | 200-10.000 |
| **PSA** | ng/ml | < 4 | 4-10 | 10-1.000 |
| **CA 15-3** | U/ml | < 40 | 40-60 | 60-30.000 |
| **CA 19-9** | U/ml | < 35 | 35-100 | 100-1.000.000 |
| **CA 125** | U/ml | < 35 | 35-50 | 50-50.000 |
| **CA 72-4** | U/ml | < 6.9 | 7-30 | 30-10000 |
| **BHCG** | mUI/ml | < 5 | > 5 | 5-100.000 |
| **B2M** | mg/ml | < 2 | > 2 | 2-10 |
| **NSE** | ng/ml | < 21 | 21-50 | 50-4000 |

## Revendications

1. Procédé de réalisation d'un dispositif microélectronique doté d'au moins un circuit de détection d'éléments biologiques comprenant des étapes de :
a) réalisation, sur un substrat, d'une pluralité de transistors comprenant chacun au moins une grille (135, 136) formée d'au moins une couche à base d'au moins un matériau (134) de grille sur au moins une couche de diélectrique (132) de grille, ladite grille reposant sur une zone (104a, 104b) de canal,
- dépôt d'au moins une couche à base d'au moins un matériau isolant (141) recouvrant lesdits transistors,
- réalisation d'un ou plusieurs trous (143) dans ladite couche de matériau isolant (141), de manière à dévoiler la face supérieure de la grille (135) respective de transistors dits « d'un premier type » parmi lesdits transistors, tandis qu'un ou plusieurs autres transistors, dits « d'un deuxième type », parmi lesdits transistors, sont recouverts de matériau isolant (141),
- remplissage des trous (143) à l'aide du matériau (134) de grille, choisi de manière à être gravé de manière sélective vis-à-vis du matériau isolant, le remplissage permettant de former des blocs (145) à base dudit matériau de grille (134) reposant respectivement sur la face supérieure des grilles (135) des transistors du premier type,
b) retrait desdits blocs à base dudit matériau de grille et au moins partiellement de la grille (135) respective des transistors du premier type, tandis que la grille (136) respective d'un ou plusieurs autres transistors, dits « transistors du deuxième type », parmi lesdits transistors, est protégée,
c) fixation sur une surface (S) située en regard de la zone de canal des transistors du premier type, de récepteurs biologiques destinés à recevoir un ou plusieurs marqueurs biologiques (Mr, Mr1, Mr2, Mr3).

2. Procédé selon l'une des revendications 1, dans lequel lesdits trous (143) ont un fond ayant une surface plus importante que la surface de la face supérieure de la grille (135) desdits transistors du premier type.

3. Procédé selon l'une des revendications 1 ou 2, dans lequel, après le remplissage desdits trous (143) à l'aide dudit matériau (134) de grille, on forme une ou plusieurs couches isolantes, et un ou plusieurs niveaux métalliques d'interconnexion (N1, ..., Nm) au en regard desdits transistors du deuxième type,
le procédé comprenant en outre : la formation, en regard des transistors du premier type, d'une ou plusieurs ouvertures (153) dans lesdites couches isolantes de manière à dévoiler les blocs (145) à base dudit matériau donné, le retrait du matériau donné et le retrait du matériau de grille à l'étape b) étant effectués à travers lesdites ouvertures (153).

4. Procédé selon l'une des revendications 1 à 3, dans lequel les récepteurs biologiques sont fixés par l'intermédiaire de liens d'accroche ou d'une couche (155) d'accroche, en particulier de nature organique.

5. Procédé selon l'une des revendications 1 à 4, dans lequel les récepteurs biologiques sont fixés par l'intermédiaire de liens d'accroche ou d'une couche d'accroche (155), formé(e)(s) sur la zone de canal (150a) des transistors du premier type ou sur ladite couche de diélectrique (132) de grille des transistors du premier type.

6. Procédé selon l'une des revendications 1 à 5, dans lequel les récepteurs biologiques (Mr) sont insérés dans une couche d'encapsulation (157).

7. Procédé selon l'une des revendications 1 à 6, dans lequel les récepteurs biologiques (Mr) sont prévus pour recevoir au moins un marqueur biologique, tel qu'au moins une protéine, ou au moins un virus, ou au moins un antigène, ou comportent des nucléotides et sont prévus pour recevoir de l'ADN.

8. Procédé selon l'une des revendications 1 à 7, comprenant en outre après l'étape c), le remplissage des dites ouvertures (153) par au moins un liquide destiné à servir à véhiculer des éléments biologiques à détecter.

## Claims

1. Method to fabricate a microelectronic device provided with at least one circuit to detect biological elements, comprising the steps of:
a) forming, on a substrate, a plurality of transistors each comprising at least one gate (135, 136) formed of at least one layer in at least one gate material (134) on at least one layer of gate dielectric (132), said gate resting on a chancel region (104a, 104b),
- depositing at least one layer in at least one insulating material (141) coating said transistors,
- forming one or more holes (143) in said layer of insulating material (141), so as to expose the upper face of the respective gate (135) of the so-called "first-type" transistors among said transistors, whilst one or more other so-called "second-type" transistors among said transistors are coated with insulating material (141),
- filling the holes (143) with gate material (134) chosen so that it can be etched selectively with respect to the insulating material, the filling hallowing the formation of blocks (145) in said gate material (134) respectively resting on the upper face of the gates (135) of the first-type transistors,
b) removing said blocks in said gate material, and removing at least in part the respective gate (135) of the first-type transistors, whilst the respective gate (136) of one or more other transistors called "second-type transistors", amongst said transistors, is protected,
c) binding biological receptors on a surface (S) located facing the channel region of the first-type transistors, these receptors intended to receive one or more biological markers (Mr, Mr1, Mr2, Mr3).

2. Method according to claim 1, wherein said holes (143) have a bottom part whose surface is greater than the surface of the upper face of the gate (135) of said first-type transistors.

3. Method according to any of claims 1 or 2 wherein, after filling said holes (143) with said gate material (134), one or more insulating layers are formed and one or more interconnection metal levels (N1,...,Nm) facing said second-type transistors,
the method further comprising:
- forming, opposite the first-type transistors, one or more openings (153) in said insulating layers so as to expose the blocks (145) in said given material,
- removing said given material and the removal of the gate material at step b) being made through said openings (153).

4. Method according to any of claims 1 to 3, wherein the biological receptors are bonded via binding linkers or a binding layer (155) in particular of organic type.

5. Method according to any of claims 1 to 4, wherein the biological receptors are bonded via binding linkers or a binding layer (155) formed on the channel region (15 ova) of the first-type transistors or on said gate dielectric layer (132) of the first-type transistors.

6. Method according to any of claims 1 to 5, wherein the biological receptors (Mr) are inserted in an encapsulation layer (157).

7. Method according to any of claims 1 to 6, wherein the biological receptors (Mr) are designed to receive at least one biological marker, such as at least one protein, or at least one virus, or at least one antigen, or they contain nucleotides and are intended to receive DNA.

8. Method according to any of claims 1 to 7, further comprising after step c), filling of said openings (153) with at least one liquid intended to act as conveyor of biological elements to be detected.

## Patentansprüche

1. Verfahren zum Herstellen einer mikroelektronischen Vorrichtung, die mit mindestens einem Schaltkreis zum Nachweis biologischer Elemente ausgestattet ist, umfassend die Schritt:
a) Aufbauen mehrerer Transistoren auf dem Substrat, wobei jeder mindestens ein Gate (135, 136), gebildet aus mindestens einer Schicht auf Basis mindestens eines Gafie-Materiafs (134), auf mindestens einer dielektrischen Gate-Schicht (132), umfasst, wobei das Gate auf einer Kanalzone (104a, 104b) liegt,
- Ablagern mindestens einer Schicht auf Basis mindestens eines isolierenden Materials (141), das die Transistoren beschichtet,
- Herstellen einer oder mehrerer Löcher (143) in der Schicht aus isolierendem Material (141), um die Oberfläche des Gates (135) bzw. von Transistoren freizulegen, "eines sogenannten ersten Typs" unter den Transistoren, während einer oder mehrere andere Transistoren "eines sogenannten zweiten Typs" unter den Transistoren mit einem isolierenden Material (141) überzogen sind,
- Auffüllen der Löcher (143) mithilfe eines Gate-Materials (134), das so ausgewählt wird, dass es selektiv geätzt wird gegenüber dem isolierenden Material, wobei die Auffüllung es erlaubt Blöcke (145) auf der Basis des Gate-Materials (134) zu bilden, die jeweils auf der Oberfläche der Gate (135) der Transistoren des ersten Typs liegen,
b) Entfernen der Blöcke auf der Basis des Gate-Materials und zumindest teilsweise des Gates (135) jeweils von Transistoren des ersten Typs, während das Gate (136) jeweils von einem oder mehreren anderen Transistoren, sogenannten "Transistoren des zweiten Typs" unter den Transistoren, geschützt ist,
c) Fixieren von biologischen Rezeptoren, die vorgesehen sind zum Aufnehmen eines oder mehrerer biologischer Marker (Mr, Mr1, Mr2, Mr3), auf einer Oberfläche (S), die gegenüber der Kanalzone der Transistoren des ersten Typs angeordnet ist.

2. Verfahren nach Anspruch 1, worin die Löcher (143) einen Boden mit einer Oberfläche aufweisen, die viel relevanter ist als die Oberfläche der oberen Fläche des Gates (135) der Transistoren des ersten Typs.

3. Verfahren nach einem der Ansprüche 1 oder 2, worin nach der Auffüllung der Löcher (143) mithilfe des Gate-Materials (134) man eine oder mehrere isolierende Schichten und ein oder mehrere metallische Verbindungs-Niveaus (N1,..., Nm) gegenüber den Transistoren des zweiten Typs bildet,
wobei das Verfahren weiterhin umfasst: gegenüber den Transistoren des ersten Typs die Bildung einer oder mehrerer Öffnungen (153) in den isolierenden Schichten, um die Blöcke (145) freizulegen, auf Basis des Bestandsmaterials, wobei das Entfernen des Bestandsmaterials und das Entfernen des Gatematerials in Schritt b) quer zu den Öffnungen (153) durchgeführt wird.

4. Verfahren nach einem der Ansprüche 1 bis 3, worin die biologischen Rezeptoren fixiert werden über Kopplungsverbindungen oder eine Kopplungsschicht (155), insbesondere organischer Natur.

5. Verfahren nach einem der Ansprüche 1 bis 4, worin die biologischen Rezeptoren filiert werden über Kopplungsverbindungen oder eine Kopplungsschicht (155), gebildet über der Kanalzone (150a) der Transistoren des ersten Typs oder über der Schicht aus Dielektrikum (132) des Gates der Transistoren des ersten Typs.

6. Verfahren nach einem der Ansprüche 1 bis 5, worin die biologischen Rezeptoren (Mr) in eine Umhüllungsschicht (157) eingebaut werden.

7. Verfahren nach einem der Ansprüche 1 bis 6, worin die biologischen Rezeptoren vorgesehen sind zum Aufnehmen mindestens eines biologischen Markers, wie mindestens einem Protein, oder mindestens einem Virus oder mindestens einem Antigen, oder Nukleotide aufweisen und vorgesehen sind zum Aufnehmen von DNA.

8. Verfahren nach einem der Ansprüche bis 7, weiterhin umfassend nach Schritt c) das Auffüllen der Öffnungen (153) durch mindestens eine Flüssigkeit, die dazu vorgesehen ist die nachzuweisenden biologischen Elemente zu transportieren.
